(19) Europäisches Patentamt / European Patent Office / Office européen des brevets

(11) **EP 2 905 094 A1**

(12) **EUROPÄISCHE PATENTANMELDUNG**

(43) Veröffentlichungstag:
**12.08.2015 Patentblatt 2015/33**

(51) Int Cl.:
***B22D 11/22*** *(2006.01)* ***B22D 46/00*** *(2006.01)*

(21) Anmeldenummer: **14154234.0**

(22) Anmeldetag: **07.02.2014**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(71) Anmelder: **Primetals Technologies Austria GmbH**
**4031 Linz (AT)**

(72) Erfinder:
• **Dittenberger, Kurt**
**4060 Leonding (AT)**

• **Lanzerstorfer, Daniel**
**4175 Herzogsdorf (AT)**
• **Hauser, Klemens**
**4055 Pucking (AT)**

(74) Vertreter: **Metals@Linz**
**c/o Siemens AG**
**Postfach 22 16 34**
**80560 München (DE)**

(54) **Überwachung eines Kühlleitungssystems**

(57) Die Erfindung betrifft ein Verfahren zur Überwachung eines Leitungssystems (1), bei dem in zumindest einer Leitung (2) des Leitungssystems (1) ein flüssiges Medium (3) geführt wird, wobei ein aktueller Druck des flüssigen Mediums (3) und ein aktueller Fluss des flüssigen Mediums (3) in der zumindest einen Leitung (2) ermittelt und als Parameter an eine Recheneinheit (5) übergeben werden, in der unter Anwendung stochastischer Methoden ein Verstopfungsgrad des Leitungssystems (1) berechnet wird, welcher zur Überwachung des Leitungssystems (1) herangezogen wird.

Ein weiterer Gegenstand der Erfindung ist eine Vorrichtung zur Durchführung des Verfahrens.

FIG 1

EP 2 905 094 A1

**Beschreibung**

**Technisches Gebiet**

Die Erfindung betrifft ein Verfahren und eine Vorrichtung zur Überwachung eines ein flüssiges Medium führenden Leitungssystems mit zumindest einer Leitung, bei dem durch Ermittlung von Druck des flüssigen Mediums und Fluss des flüssigen Mediums in der zumindest einen Leitung ein Verstopfungsgrad für die zumindest eine Leitung berechnet wird, welcher als Hinweis für das Vorliegen einer Störung des Leitungssystems herangezogen wird.

**Stand der Technik**

An Leitungssysteme, welche flüssige Medien führen, werden hohe Anforderungen in Bezug auf Zuverlässigkeit gestellt, da diese oftmals zentrale Bestandteile von sicherheitsrelevanten Vorrichtungen darstellen. Beispielsweise müssen als Bestandteil von Kühleinrichtungen ausgeführte Leitungssysteme laufend auf ihre Funktionstüchtigkeit überprüft werden, da im Falle eines Versagens des Leitungssystems, beispielsweise durch Leckagen oder Verstopfungen, hohe Schäden verursacht werden können.

Führt das Leitungssystem beispielsweise flüssige Medien wie Wasser, so besteht eine bekannte Methode zur Überwachung eines derartigen Leitungssystems darin, laufend den aktuellen Fluss des flüssigen Mediums im Leitungssystem als Parameter zu erfassen. Mittels einer sogenannten Wasserdruckfunktion wird aus den erfassten Parametern ein sogenannter theoretischer Druck des flüssigen Mediums ermittelt. Der theoretische Druck des flüssigen Mediums ist jener Druck, der sich durch Einsetzen des aktuellen Flusses des flüssigen Mediums aus der Wasserdruckfunktion ergibt. Nach Messung des aktuellen Drukkes des flüssigen Mediums im Leitungssystem wird die Differenz zwischen dem aktuellen Druck des flüssigen Mediums und dem theoretischen Druck des flüssigen Mediums ermittelt. Die sich ergebenden Differenzen dienen beispielsweise als Maß für die Verstopfung beziehungsweise als Maß für die Größe der Leckage des Leitungssystems und werden laufend gegen eine vorgegebene Toleranz verglichen. Wird die Toleranz über einen längeren Zeitraum überschritten, so wird ein Alarm als Hinweis auf eine Störung des Leitungssystems ausgelöst.

Nachteilig dabei ist, dass die erfassten Parameter im Allgemeinen mit einem starken Rauschen beaufschlagt sind, wodurch unnötige Fehlalarme ausgelöst werden. Um dies zu vermeiden, werden relativ große Toleranzen vorgegeben, wobei dies wiederum die Zuverlässigkeit der Überwachung negativ beeinflusst. Ein weiterer Nachteil besteht darin, dass die ermittelte Differenz zwischen dem aktuellen Druck des flüssigen Mediums und dem theoretischen Druck des flüssigen Mediums nur eine tendenzielle Auskunft über das Maß der Verstopfung gibt.

Generell ist es daher schwierig, vernünftige Werte für die Toleranzen vorzugeben, bei denen sowohl wenige Fehlalarme ausgelöst werden als auch ein gewisses Maß an Zuverlässigkeit der Überwachung gegeben ist.

**Zusammenfassung der Erfindung**

**Technische Aufgabe**

Aufgabe der vorliegenden Erfindung ist es, ein Verfahren und eine Vorrichtung zur zuverlässigen Überwachung eines Leitungssystems bereitzustellen, welche die genannten Nachteile überwinden.

**Technische Lösung**

Die Aufgabe wird durch ein Verfahren zur Überwachung eines Leitungssystems, bei dem in zumindest einer Leitung des Leitungssystems ein flüssiges Medium geführt wird, umfassend die Verfahrensschritte:

a) Ermittlung von

• aktuellem Druck des flüssigen Mediums in der zumindest einen Leitung und
• aktuellem Fluss des flüssigen Mediums in der zumindest einen Leitung,

als Parameter,

b) Übergeben der Parameter an eine Recheneinheit,

c) mittels der Recheneinheit Berechnen eines theoretischen Flusses des flüssigen Mediums in der zumindest einen Leitung aus den Parametern unter Berücksichtigung einer vorgegebenen Flussfunktion, welche einen physikalischen Zusammenhang zwischen dem theoretischen Fluss des flüssigen Mediums, dem aktuellen Druck des flüssigen Mediums beschreibt,

d) mittels der Recheneinheit Berechnen eines Intervalls für einen Verstopfungsgrad, welcher sich aus dem Quotienten zwischen dem aktuellen und dem theoretischen Fluss ergibt unter Anwendung stochastischer Methoden, innerhalb dessen der Verstopfungsgrad mit einer festzulegenden Wahrscheinlichkeit liegt,

e) Überwachung des Leitungssystems durch Heranziehen der Lage des Intervalls in Bezug auf vorher festgelegte Grenzen für den Verstopfungsgrad als Hinweis für das Vorliegen einer Störung des Leitungssystems,

gelöst.

In der zumindest einen Leitung des Leitungssystems befindet sich das flüssige Medium. Es werden der aktuelle, beziehungsweise der tatsächliche Druck des flüssigen Mediums und der aktuelle, beziehungsweise der tatsächliche Fluss des flüssigen Mediums in der zumindest einen Leitung des Leitungssystems ermittelt. Die ermittelten Parameter werden an eine Recheneinheit übergeben. In der Recheneinheit erfolgt eine Berechnung eines theoretischen Flusses des flüssigen Mediums in der zumindest einen Leitung aus den Parametern unter Berücksichtigung einer sogenannten Flussfunktion, welche einen physikalischen Zusammenhang zwischen dem theoretischen Fluss des flüssigen Mediums und dem aktuellen Druck des flüssigen Mediums beschreibt.

Die theoretische Flussfunktion wird, unter der Voraussetzung, dass das Leitungssystem störungsfrei ist - also keine Leckagen und/oder Verstopfungen aufweist - beispielsweise folgendermaßen ermittelt:

Zu jedem aktuellen Druck des flüssigen Mediums wird der aktuelle Fluss des flüssigen Mediums im Leitungssystem beziehungsweise in der zumindest einen Leitung ermittelt. Die dabei generierten Wertetupel beschreiben empirisch den Zusammenhang zwischen dem aktuellen Druck des flüssigen Mediums und dem aktuellen Fluss des flüssigen Mediums im Leitungssystem. Der generierten Zusammenhang wird mittels einer geeigneten Funktion - der Flussfunktion - gefittet. Die Flussfunktion wird in der Recheneinheit hinterlegt.

Theoretische Grundlagen und Herleitung der Flussfunktion:

Die Druckdifferenz $\Delta pw$ des flüssigen Mediums im Leitungssystem beziehungsweise in der zumindest einen Leitung beträgt entsprechend dem Gesetz von Pascal:

$$\Delta pw = \rho\, g\, \Delta h \ ,$$

mit $\rho$ als Dichte des flüssigen Mediums, $g$ als Erdbeschleunigung und $\Delta h$ als Höhendifferenz zwischen einer Druckmessvorrichtung zur Messung des Druckes des flüssigen Mediums und der Position des Leitungssystems beziehungsweise der zumindest einen Leitung.

Der reibungsbedingte Druckverlust $\Delta pf$ im Leitungssystem beziehungsweise in der zumindest einen Leitung ist durch die Darcy-Weisbach Gleichung entsprechend:

$$\Delta pf = \frac{\rho v^2}{2} \frac{l}{d} \lambda \ ,$$

mit $\rho$ als Dichte des flüssigen Mediums, $v$ als charakteristische Geschwindigkeit des flüssigen Mediums, $l$ und $d$ als Länge beziehungsweise Durchmesser der zumindest einen Leitung und $\lambda$ als Darcy-Reibungsfaktor, gegeben.

Der Druckverlust, welcher gegebenenfalls aus von in der Leitung vorhandenen Einbauten resultiert, wird vernachlässigt. Der Darcy-Reibungsfaktor $\lambda$ ist abhängig von der charakteristischen Geschwindigkeit und von der Rauheit der zumindest einen Leitung. Für laminare Strömungen (Reynoldszahl Re < 2050) gilt:

$$\lambda = \frac{64}{\mathrm{Re}} \quad mit \quad \mathrm{Re} = \frac{\rho\, v\, d}{\eta} \ ,$$

mit $\eta$ als dynamische Viskosität des flüssigen Mediums.

Für turbulente Strömungen (Reynoldszahl Re > 4000) gilt die Colebrook Gleichung, aus der der Darcy-Reibungsfaktor numerisch bestimmt wird:

$$\frac{1}{\sqrt{\lambda}} = 2\log_{10}\left(\frac{2.51}{\mathrm{Re}\sqrt{\lambda}} + \frac{k}{3.7d}\right),$$

mit k als Rauheit der zumindest einen Leitung.

Die Rauheit der zumindest einen Leitung beträgt näherungsweise 0.05mm. Für Re > 2010 und Re < 4000 gilt die Formel von Blasius:

$$\lambda = 0.3164/\mathrm{Re}^{0.25}.$$

Um die Flussfunktion zu erhalten, wird eine Funktion an die generierten Wertetupel gefittet. Die Flussfunktion kann beispielsweise als

$$w_p = c_1 f^{c_2} + c$$

mit $w_p$ als Druck des flüssigen Mediums, $f$ dem Fluss des flüssigen Mediums und mit $c$, $c_1$ und $c_2$ als Koeffizienten geschrieben werden.

In einem ersten Schritt werden, beispielsweise in einer Testanordnung, in welchem die physikalischen Verhältnisse des tatsächlichen Leitungssystems beziehungsweise der zumindest einen Leitung wiedergegeben werden, die ermittelten Werte für den aktuellen Fluss und den aktuellen Druck des flüssigen Mediums im Leitungssystem mittels der Funktion:

$$w_p = c_1 f^{c_2}$$

gefittet. Die Koeffizienten $c_1$ und $c_2 \approx 2$ sind Konstanten. In einem weiteren Schritt werden die im tatsächlichen Leitungssystem ermittelten Daten für den aktuellen Fluss und den aktuellen Druck des flüssigen Mediums mittels der Funktion:

$$w_p = p_1 + (p_2 + c_1)f^{c_2} + p_3 f^{1.7}$$

gefittet, wobei $p_1$ die Druckdifferenz bezüglich Austrittsposition des flüssigen Mediums aus der zumindest einen Leitung und Druckmessung und $p_2$ sowie $p_3$ den Druckverlust des flüssigen Mediums im Leitungssystem beziehungsweise in der zumindest einen Leitung auf Grund der Reibung zwischen dem flüssigen Medium und dem Leitungssystem beziehungsweise der zumindest einen Leitung beschreiben.

Entsprechend der Gleichung von Bernoulli, ist der Zusammenhang zwischen dem Druck des flüssigen Mediums $w_p$ und dem Fluss des flüssigen Mediums $f$ durch:

$$w_p = c_1 f^2 + c$$

gegeben.

Zu beachten ist, dass die oben genannten Relationen nur für Einphasenströmungen gültig sind.

Nach Generierung der Flussfunktion lässt sich aus dem ermittelten aktuellen Druck $w_p$ des flüssigen Mediums der theoretische Fluss $f$ des flüssigen Mediums im Leitungssystem beziehungsweise in der zumindest einen Leitung berechnen.

Mittels der Recheneinheit wird anschließend ein Intervall für einen Verstopfungsgrad *verstopf* berechnet, innerhalb dessen der Verstopfungsgrad mit einer festzulegenden Wahrscheinlichkeit liegt. Der Verstopfungsgrad ergibt sich aus dem Quotienten zwischen dem aktuellen (gemessenen) Fluss $f_{act}$ und dem theoretischen Fluss $f$: (Der Fluss $f$ wird dann als theoretischer Fluss $f$ bezeichnet, wenn er durch Einsetzen des aktuellen Druckes des flüssigen Mediums in die Flussfunktion berechnet wird.)

$$verstopf = \frac{f_{act}}{f} - 1\,.$$

Für den Fall, dass das im Leitungssystem von der zumindest einen Leitung geführte flüssige Medium am Ende der zumindest einen Leitung über Düsen vom Leitungssystem beziehungsweise von der zumindest einen Leitung austritt, bedeutet beispielsweise ein Verstopfungsgrad von -0.1 (-10%), dass das Leitungssystem beziehungsweise die zumindest eine Leitung oder die Düse zu 10% verstopft ist. Ein Verstopfungsgrad von +0.1 (+10%) bedeutet, dass 10% des im Leitungssystem geführten flüssigen Mediums über eine Leckage aus dem Leitungssystem austritt.

Die Berechnung des Intervalls für den Verstopfungsgrad, innerhalb dessen der Verstopfungsgrad mit einer gewissen, vorher festzulegenden Wahrscheinlichkeit liegt, erfolgt durch Anwenden stochastischer Methoden. Dabei werden laufend und in zyklischen Abständen der theoretische Fluss $f$ (mittels der Flussfunktion) sowie der aktuelle Fluss $f_{act}$ im Leitungssystem beziehungsweise in der zumindest einen Leitung als Datenstrom ermittelt beziehungsweise gemessen. Sowohl der theoretische Fluss $f$ als auch der aktuelle Fluss $f_{act}$ werden als Zufallsvariablen betrachtet. Mittels der stochastischen Methoden wird mit einer bestimmten Irrtumswahrscheinlichkeit bestimmt, für welche Werte $\kappa$ ($\kappa$ modelliert den Verstopfungsgrad) die Datenströme $\kappa*f$ und $f_{act}$ nicht vom gleichen Zufallsprozess erzeugt werden können. Die Wahrscheinlichkeit, dass das Leitungssystem beziehungsweise die zumindest eine Leitung einen Verstopfungsgrad aufweist, der im berechneten Intervall liegt, beträgt 1 minus der Irrtumswahrscheinlichkeit.

Das Leitungssystem, beziehungsweise die zumindest eine Leitung wird durch Heranziehen der Lage dieses Intervalls in Bezug auf vorher festgelegte, zulässige Grenzen für den Verstopfungsgrad hinsichtlich des Vorliegens einer Störung des Leitungssystems beziehungsweise der zumindest einen Leitung überwacht.

Ein wesentlicher Vorteil des erfindungsgemäßen Verfahrens besteht darin, dass auch verrauschte Signale kein Problem darstellen und somit Fehlalarme bei der Überwachung des Leitungssystems beziehungsweise der zumindest einen Leitung vermieden werden. Um derartige Fehlalarme zu vermeiden, werden in aus dem Stand der Technik bekannten Verfahren relativ große Toleranzen, welche als Differenz zwischen dem aktuellen Druck des flüssigen Mediums und dem theoretischen Druck des flüssigen Mediums gegeben sind, vorgegeben.

Beim erfindungsgemäßen Verfahren hingegen sind derartige große Toleranzen überflüssig. Außerdem gibt die Differenz zwischen dem aktuellen Druck des flüssigen Mediums und dem theoretischen Druck des flüssigen Mediums nur eine tendenzielle Auskunft über das Maß der Verstopfung.

Im Gegensatz dazu, wird mittels des erfindungsgemäßen Verfahrens ein konkretes Intervall berechnet, innerhalb dessen der Verstopfungsgrad mit einer vorgegebenen Wahrscheinlichkeit liegt.

In einer bevorzugten Ausführungsform des erfindungsgemäßen Verfahrens ist das Leitungssystem als Kühlsystem eines metallurgischen Aggregats, insbesondere als Kühlsystem einer Stranggussanlage für die Herstellung eines metallischen Stranges, oder als Kühlsystem eines Walzwerks für die Herstellung eines Metallbandes, ausgebildet, wobei das mittels der zumindest einen Leitung zu einer Düse geführte flüssige Medium mittels der Düse auf den metallischen Strang beziehungsweise auf das Metallband aufgebracht wird.

Das flüssige Medium wird zur Düse geführt. Der in der Stranggießanlage hergestellte metallische Strang beziehungsweise das im Walzwerk hergestellte Metallband wird mittels des flüssigen Mediums, welches aus der Düse austritt, gekühlt. Derartige Kühlsysteme erfordern eine hohe Verfügbarkeit sowie eine hohe Betriebssicherheit und Zuverlässigkeit, da im Falle eines Versagens des Kühlsystems beträchtliche Schäden entstehen können. Wird zur Überwachung des Kühlsystems das erfindungsgemäße Verfahren angewandt, so können Störungen infolge einer Leckage oder einer Verstopfung des Kühlsystems beziehungsweise der Düsen schnell und zuverlässig erkannt werden, ohne dabei unnötige Fehlalarme auszulösen.

In einer weiteren bevorzugten Ausführungsform des erfindungsgemäßen Verfahrens ist das flüssige Medium, welches zu der zumindest einen Düse geführt wird, Wasser.

Wasser ist ein in ausreichender Menge vorhandenes und billig verfügbares, umweltneutrales Medium welches beispielsweise effektiv zur Kühlung eingesetzt werden kann.

Eine bevorzugte Ausführungsform des erfindungsgemäßen Verfahrens ist dadurch gekennzeichnet, dass die Verfahrensschritte a) bis e) in zyklischen Zeitabständen durchgeführt werden, wobei die Zeitabstände zwischen 2 Sekunden und 5 Sekunden, bevorzugt 3 Sekunden betragen.

Betragen die zyklischen Zeitabstände zwischen 2 Sekunden und 5 Sekunden, bevorzugt 3 Sekunden, so ergibt sich ein optimales Verhältnis zwischen anfallender Datenmenge der ermittelten Parameter und Genauigkeit beziehungsweise Zuverlässigkeit des erfindungsgemäßen Verfahrens.

In einer weiteren Ausführungsform des erfindungsgemäßen Verfahrens umfasst die stochastische Methode einen Ein-Stichproben T-Test.

Der T-Test ist ein statistischer Hypothesentest, welcher auf ein Datensample unter der Voraussetzung einer Normalverteilung angewendet werden kann. Im Rahmen dieser Anmeldung wird vorzugsweise der Ein-Stichproben T-Test angewandt. Unter der Annahme, dass der aktuelle (gemessene) Fluss $f_{act}$ mit dem Wert $\kappa$ um den theoretischen Fluss $f$ fluktuiert, kann der Ein-Stichproben T-Test in abgewandelter Form als:

$$\frac{\left|E\left(f_{act}\right)-\kappa E\left(f\right)-\mu_{0}\right|}{\sqrt{\mathrm{var}\left(f_{act}\right)+\kappa^{2}\,\mathrm{var}\left(f\right)-2\kappa\,\mathrm{cov}\left(f_{act},f\right)}}\sqrt{n}\leq t\left(1-\alpha/2,n-1\right)$$

geschrieben werden. Dabei ist $E(f_{act})$ der Erwartungswert der aktuellen (gemessenen) Flüsse, $E(f)$ der Erwartungswert der theoretischen Flüsse, $\mu_0$ der Mittelwert der Differenz ($f_{act}$-$f$), var die Varianz, $n$ die Anzahl der Werte (Stichprobenumfang), $t$ die t-Verteilung für ein $\alpha$-Quantil, beispielsweise von 0.05 und $n$ Freiheitsgrade. Die obige Gleichung kann nach $\kappa$ mit den Lösungen $\kappa1$ und $\kappa1$ aufgelöst werden, wobei $k1$ die kleinere und $k2$ die größere Lösung ist. Aus $k1$ und $k2$ werden *verstopf1* und *verstopf2* mittels *verstopf = k-1* berechnet. Das bedeutet, dass der Verstopfungsgrad innerhalb des Intervalls *[verstopf1;verstopf2]* mit einer Wahrscheinlichkeit von (1 - $\alpha$) liegt.

Eine weitere Ausgestaltung des erfindungsgemäßen Verfahrens ist dadurch gekennzeichnet, dass die festzulegende Wahrscheinlichkeit frei wählbar ist.

Die Wahrscheinlichkeit wird auf 90%, vorzugsweise auf 95% festgelegt. Bei kritischen Systemen wird die Wahrscheinlichkeit auf 99% festgelegt.

In einer bevorzugten Ausführungsform des erfindungsgemäßen Verfahrens wird ein Alarm als Hinweis für die Störung des Leitungssystems ausgelöst, wenn das berechnete Intervall für den Verstopfungsgrad außerhalb der festgelegten Grenzen für den Verstopfungsgrad liegt.

Sind *verstopf1* und *verstopf2* negativ und kleiner als die festgelegten Grenzen wird ein Alarm als Hinweis für eine Verstopfung der zumindest einen Leitung ausgelöst.

Sind *verstopf1* und *verstopf2* positiv und größer als die festgelegten Grenzen, wird ein Alarm als Hinweis für einen Bruch der zumindest einen Leitung ausgelöst.

Ist die Differenz *verstopf2* minus *verstopf1* größer als eine festgelegte zweite Grenze, so wird ein Alarm ausgelöst der besagt das Leitungssystem unbestimmbar ist.

Für alle anderen *verstopf1* und *verstopf2* wird das Leitungssystem als fehlerfrei klassifiziert und mögliche bereits erkannte Alarme gelöscht.

In einer anderen Ausführungsform des erfindungsgemäßen Verfahrens handelt es sich bei dem metallischen Strang um einen Stahlstrang.

Unter metallisch ist neben Stahl insbesondere auch Eisen, Kupfer, Aluminium oder eine Mischung daraus zu verstehen. Es kann sich beispielsweise auch um einen Aluminiumstrang handeln.

Das metallische Band ist in einer weiteren Ausführungsform des erfindungsgemäßen Verfahrens ein Stahlflachbandprodukt.

Beispielsweise wird das Stahlflachbandprodukt mittels eines Warmwalzprozesses in einer Warmwalzstrasse des Walzwerkes produziert.

Die Überwachung des Leitungssystems erfolgt in einer bevorzugten Ausführungsform des erfindungsgemäßen Verfahrens auch während eines Stillstandes der Stranggussanlage beziehungsweise des Walzwerkes.

Dies hat den Vorteil, dass das Leitungssystem während Instandhaltungsarbeiten an der Stranggussanlage oder am Walzwerk auf Störungen überprüft werden kann und gegebenenfalls Leckagen oder Verstopfungen des Leitungssystems noch vor Inbetriebahme der Stranggussanlage oder des Walzwerkes behoben werden können.

Es ist auch denkbar, dass neben dem flüssigen Medium auch ein gasförmiges Medium in einer weiteren Leitung des Leitungssystems geführt wird. Das flüssige Medium und das gasförmige Medium werden dabei, zumindest teilweise, in getrennten Leitungen geführt und im Bereich der Düse zu einem Gemisch gemischt. Das Gemisch wird dann beispielsweise auf den metallischen Strang beziehungsweise auf das Metallband aufgebracht. Dabei wird, zusätzlich zum flüssigen Medium, das gasförmige Medium bei der Herleitung der Flussfunktion entsprechend berücksichtigt.

Ein weiterer Gegenstand der Erfindung ist eine Vorrichtung zur Durchführung des erfindungsgemäßen Verfahrens, umfassend:

- ein Leitungssystem mit zumindest einer Leitung, in der ein flüssiges Medium führbar ist,

- zumindest jeweils eine Einrichtung zur Ermittlung von

  o aktuellem Druck des flüssigen Mediums in der zumindest einen Leitung und
  o aktuellem Fluss des flüssigen Mediums in der zumindest einen Leitung,
  als Parameter,

- eine mit den Einrichtungen gekoppelte Recheneinheit zur Berechnung

  o eines theoretischen Flusses des flüssigen Mediums in der zumindest einen Leitung aus den Parametern unter Berücksichtigung einer in der Recheneinheit hinterlegten Flussfunktion, welche einen physikalischen Zusammenhang zwischen dem theoretischen Fluss des flüssigen Mediums und dem aktuellen Druck des flüssigen Mediums beschreibt und
  o eines Intervalls für einen Verstopfungsgrad, welcher sich aus dem Quotienten zwischen dem aktuellen und dem theoretischen Fluss ergibt unter Anwendung stochastischer Methoden, innerhalb dessen der Verstopfungsgrad mit einer festzulegenden Wahrscheinlichkeit liegt und

- eine Überwachungseinheit zur Überwachung des Leitungssystems durch Heranziehen der Lage des Intervalls in Bezug auf vorher festgelegte Grenzen für den Verstopfungsgrad als Hinweis für das Vorliegen einer Störung des Leitungssystems.

Eine besonders bevorzugte Ausführungsform der erfindungsgemäßen Vorrichtung umfasst:

- ein metallurgisches Aggregat, insbesondere eine Stranggussanlage zur Herstellung eines metallischen Stranges oder ein Walzwerk zur Herstellung eines Metallbandes, ausgestattet mit dem Leitungssystem als Kühlsystem,
- zumindest eine Düse, in welche die zumindest eine Leitung des Leitungssystems mündet, mittels der das flüssige Medium auf den metallischen Strang beziehungsweise auf das Metallband aufbringbar ist.

Das Leitungssystem ist Teil des Kühlsystems des metallurgischen Aggregats. Das Leitungssystem umfasst zumindest eine Leitung, an dessen einen Ende die Düse angeordnet ist. Das in der zumindest einen Leitung befindliche flüssige Medium wird mittels der Düse auf den auf den metallischen Strang beziehungsweise auf das Metallband aufgebracht.

In einer bevorzugten Ausführungsform der erfindungsgemäßen Vorrichtung umfasst die Vorrichtung eine Alarmeinrichtung zur Auslösung eines Alarms als Hinweis für die Störung des Leitungssystems, welche mit der Recheneinheit gekoppelt ist.

Die Alarmeinrichtung ist mit der Recheneinheit gekoppelt. Wird eine Störung des Leitungssystems erkannt, so erfolgt mittels der Alarmeinrichtung eine Benachrichtigung an eine Empfangseinrichtung, insbesondere an eine akustische und/oder an eine optische Signaleinrichtung. Die Empfangseinrichtung kann beispielsweise auch als Mobiltelefon, Tablet und oder als Computer ausgeführt sein.

Ein weiterer Gegenstand der vorliegenden Erfindung ist ein Computerprogrammprodukt zum Ablauf in der Recheneinheit der erfindungsgemäßen Vorrichtung zur Durchführung des erfindungsgemäßen Verfahrens.

Ein anderer Gegenstand der vorliegenden Erfindung ist ein computerlesbares Speichermedium, das das erfindungsgemäße Computerprogrammprodukt umfasst.

## Kurze Beschreibung der Zeichnungen

FIG 1 zeigt ein erfindungsgemäßes Verfahren und eine erfindungsgemäße Vorrichtung zur Überwachung eines Leitungssystems.

FIG 2 zeigt einen Zusammenhang zwischen aktuellem Fluss $f_{act}$ und aktuellem Druck $w_p$ eines flüssigen Mediums 3 eines Leitungssystems 1 und einen Datenfit 16.

## Beschreibung der Ausführungsformen

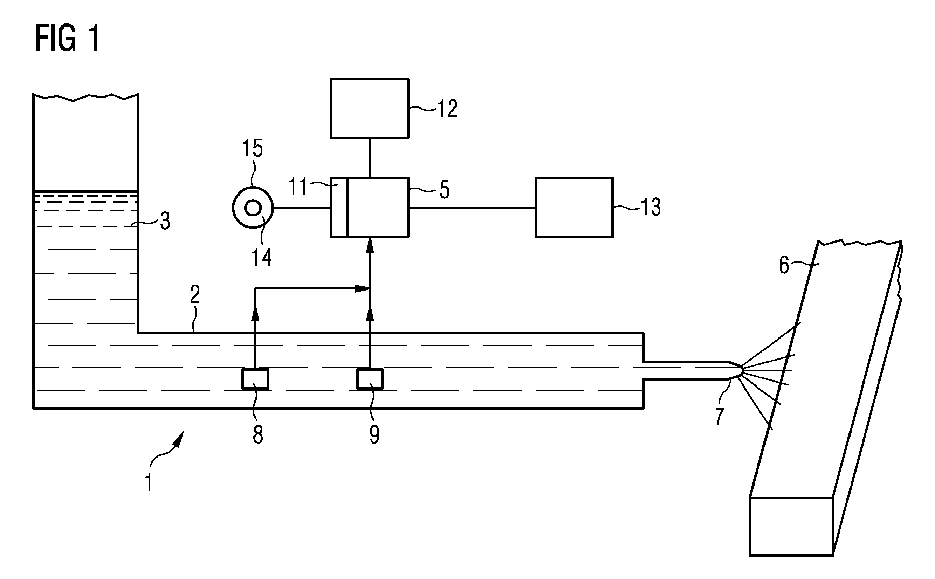

FIG 1 zeigt ein erfindungsgemäßes Verfahren und eine erfindungsgemäße Vorrichtung zur Überwachung eines Leitungssystems 1.

In einer Leitung 2 des Leitungssystems 1 wird ein flüssiges Medium 3 geführt, wobei das flüssige Medium Wasser ist.

In einem ersten Schritt werden mittels einer Einrichtung 8 zur Ermittlung eines aktuellen Drucks des flüssigen Mediums 3 in der Leitung 2 und mittels einer Einrichtung 9 zur Ermittlung des aktuellen Flusses des flüssigen Mediums 3 in der Leitung 2, der aktuelle Druck des flüssigen Mediums 3 und der aktuelle Fluss des flüssigen Mediums 3 in der Leitung 2 als Parameter ermittelt. In einem zweiten Schritt werden die Parameter an eine mit den Einrichtungen 8,9 gekoppelte Recheneinheit 5 übergeben. Mittels der Recheneinheit 5 wird in einem dritten Schritt des erfindungsgemäßen Verfahrens aus den Parametern ein theoretischer Fluss des flüssigen Mediums 3 in der zumindest einen Leitung 2, unter Berücksichtigung einer vorgegebenen Flussfunktion, welche einen physikalischen Zusammenhang zwischen dem theoretischen Fluss des flüssigen Mediums 3 und dem aktuellen Druck des flüssigen Mediums 3 beschreibt, berechnet.

Zusätzlich wird in einem vierten Schritt mittels der Recheneinheit 5, unter Anwendung stochastischer Methoden - insbesondere ein Ein-Stichproben T-Test - ein Intervall, innerhalb dessen ein Verstopfungsgrad mit einer frei wählbaren Wahrscheinlichkeit liegt, berechnet. Die Wahrscheinlichkeit wird auf 90%, vorzugsweise auf 95% festgelegt. Der Verstopfungsgrad ergibt sich aus dem Quotienten zwischen dem aktuellen und dem theoretischen Fluss.

In einem letzten und fünften Schritt wird das Leitungssystem 1 durch Heranziehen der Lage des Intervalls in Bezug auf vorher festgelegte Grenzen für den Verstopfungsgrad überwacht. Die Lage des Intervalls dient dabei als Hinweis für das Vorliegen einer Störung des Leitungssystems 1.

In FIG 1 ist das Leitungssystem 1 als Kühlsystem einer Stranggussanlage für die Herstellung eines metallischen Stranges 6 ausgebildet. Dabei wird das mittels der Leitung 2 zu einer Düse 7 geführte flüssige Medium 3 mittels der Düse 7 auf den metallischen Strang 6 - insbesondere auf einen Stahlstrang - aufgebracht.

Die Schritte 1 bis 5 werden in zyklischen Zeitabständen durchgeführt, wobei die Zeitabstände zwischen 2 Sekunden und 5 Sekunden, bevorzugt 3 Sekunden betragen.

Wenn das berechnete Intervall für den Verstopfungsgrad außerhalb der festgelegten Grenzen für den Verstopfungsgrad liegt, wird mittels einer mit der Recheneinheit 5 gekoppelten Alarmeinrichtung 13 ein Alarm als Hinweis für die Störung des Leitungssystems 1 ausgelöst.

Die Überwachung des Leitungssystems 1 wird auch während eines Stillstandes der Stranggussanlage durchgeführt.

Mittels eines Computerprogrammproduktes 14, welches in der Recheneinheit 5 abläuft, werden die Verfahrensschritte gesteuert. Das Computerprogrammprodukt 14 befindet sich auf einem computerlesbaren Speichermedium 15.

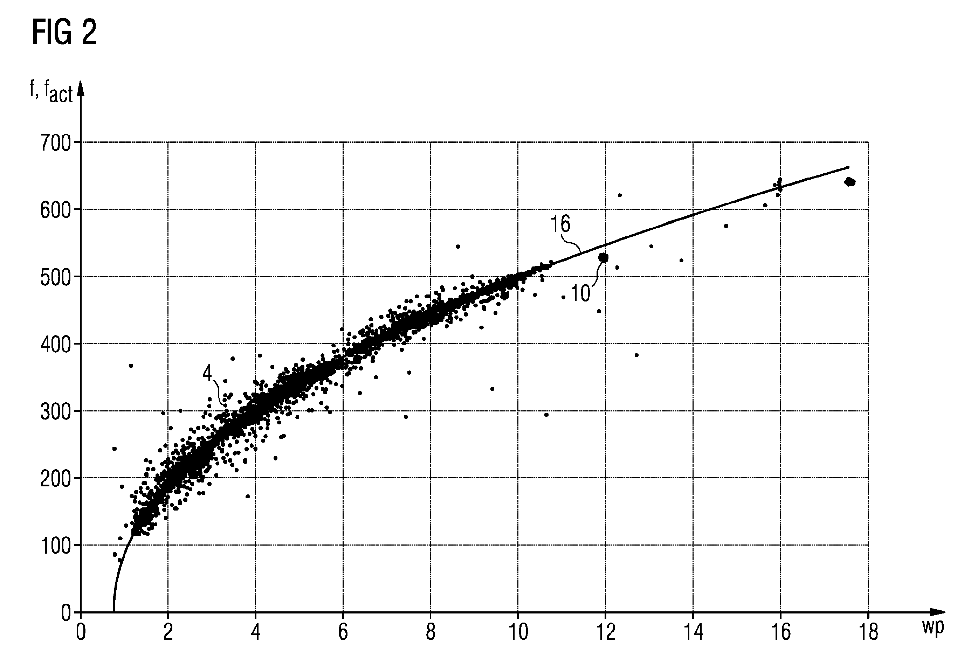

FIG 2 zeigt einen Zusammenhang zwischen aktuellem Fluss $f_{act}$ und aktuellem Druck $w_p$ des flüssigen Mediums 3 des Leitungssystems 1 und einen Datenfit 16.

Auf der Abszisse ist der aktuelle Druck $w_p$ des flüssigen Mediums 3, konkret der Wasserdruck, aufgetragen.

Auf der Ordinate sind, in Abhängigkeit vom aktuellen Druck $w_p$, dargestellt:

- der aktuelle Fluss $f_{act}$ des flüssigen Mediums 3, konkret der aktuelle Wasserfluss, welcher in der Leitung 2 des tatsächlichen Leitungssystems 1 ermittelt wurde - dargestellt durch kleine Punkte 4,

- der aktuelle Fluss $f_{act}$ des flüssigen Mediums 3, konkret der aktuelle Wasserfluss, welcher in der Leitung 2 des Leitungssystems 1 einer Testanordnung, in welchem die physikalischen Verhältnisse des tatsächlichen Leitungssystems 1 beziehungsweise der zumindest einen Leitung 2 wiedergegeben werden, ermittelt wurde - dargestellt durch große Punkte 10 und

- der theoretische Fluss $f$ des flüssigen Mediums 3, konkret der theoretische Wasserfluss, welcher in FIG 2 als Datenfit 16 der Werte für den aktuellen Fluss $f_{act}$ des flüssigen Mediums 3 in der Leitung 2 des tatsächlichen Leitungssystems 1 ermittelt wurde. Der Datenfit 16 könnte in der gleichen Weise auch aus der Testanordnung ermittelt werden.

Der theoretische Fluss $f$ stellt dabei die Flussfunktion, also den Zusammenhang zwischen dem aktuellen Druck $w_p$ des flüssigen Mediums 3 und dem aktuellen Fluss $f_{act}$ des flüssigen Mediums 3, dar. Die Flussfunktion wird in der Recheneinheit 5 hinterlegt.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

**Liste der Bezugszeichen**

1    Leitungssystem

2      Leitung

3      flüssiges Medium

4      kleine Punkte

5      Recheneinheit

6      metallischer Strang

7      Düse

8      Einrichtung zur Ermittlung von aktuellem Druck des flüssigen Mediums

9      Einrichtung zur Ermittlung von aktuellem Fluss des flüssigen Mediums

10     große Punkte

11     Flussfunktion

12     Übewachungseinheit

13     Alarmeinrichtung

14     Computerprogrammprodukt

15     computerlesbares Speichermedium

16     Datenfit

**Patentansprüche**

**1.** Verfahren zur Überwachung eines Leitungssystems (1), bei dem in zumindest einer Leitung (2) des Leitungssystems (1) ein flüssiges Medium (3) geführt wird, umfassend die Verfahrensschritte:

a) Ermittlung von

• aktuellem Druck des flüssigen Mediums (3) in der zumindest einen Leitung (2) und
• aktuellem Fluss des flüssigen Mediums (3) in der zumindest einen Leitung (2),

als Parameter,
b) Übergeben der Parameter an eine Recheneinheit (5),
c) mittels der Recheneinheit (5) Berechnen eines theoretischen Flusses des flüssigen Mediums (3) in der zumindest einen Leitung (2) aus den Parametern unter Berücksichtigung einer vorgegebenen Flussfunktion, welche einen physikalischen Zusammenhang zwischen dem theoretischen Fluss des flüssigen Mediums (3) und dem aktuellen Druck des flüssigen Mediums (3) beschreibt,
d) mittels der Recheneinheit (5) Berechnen eines Intervalls für einen Verstopfungsgrad, welcher sich aus dem Quotienten zwischen dem aktuellen und dem theoretischen Fluss ergibt unter Anwendung stochastischer Methoden, innerhalb dessen der Verstopfungsgrad mit einer festzulegenden Wahrscheinlichkeit liegt und
e) Überwachung des Leitungssystems (1) durch Heranziehen der Lage des Intervalls in Bezug auf vorher festgelegte Grenzen für den Verstopfungsgrad als Hinweis für das Vorliegen einer Störung des Leitungssystems (1).

**2.** Verfahren nach Anspruch 1, **dadurch gekennzeichnet, dass** das Leitungssystem (1) als Kühlsystem eines metallurgischen Aggregats, insbesondere als Kühlsystem einer Stranggussanlage für die Herstellung eines metallischen Stranges (6), oder als Kühlsystem eines Walzwerks für die Herstellung eines Metallbandes, ausgebildet ist, wobei das mittels der zumindest einen Leitung (2) zu einer Düse (7) geführte flüssige Medium (3) mittels der Düse

(7) auf den metallischen Strang (6) beziehungsweise auf das Metallband aufgebracht wird.

**3.** Verfahren nach einem der vorhergehenden Ansprüche, **dadurch gekennzeichnet, dass** das flüssige Medium (3), welches zu der zumindest einen Düse (7) geführt wird, Wasser ist.

**4.** Verfahren nach einem der vorhergehenden Ansprüche, **dadurch gekennzeichnet, dass** die Verfahrensschritte a) bis e) in zyklischen Zeitabständen durchgeführt werden, wobei die Zeitabstände zwischen 2 Sekunden und 5 Sekunden, bevorzugt 3 Sekunden betragen.

**5.** Verfahren nach einem der vorhergehenden Ansprüche, **dadurch gekennzeichnet, dass** die stochastischen Methoden einen Ein-Stichproben T-Test umfassen.

**6.** Verfahren nach einem der vorhergehenden Ansprüche, **dadurch gekennzeichnet, dass** die festzulegende Wahrscheinlichkeit frei wählbar, vorzugsweise auf 90% festgelegt wird.

**7.** Verfahren nach einem der vorhergehenden Ansprüche, **dadurch gekennzeichnet, dass** ein Alarm als Hinweis für die Störung des Leitungssystems (1) ausgelöst wird, wenn das berechnete Intervall für den Verstopfungsgrad außerhalb der festgelegten Grenzen für den Verstopfungsgrad liegt.

**8.** Verfahren nach einem der Ansprüche 2 bis 7, **dadurch gekennzeichnet, dass** es sich bei dem metallischen Strang (6) um einen Stahlstrang handelt.

**9.** Verfahren nach einem der Ansprüche 2 bis 7, **dadurch gekennzeichnet, dass** es sich bei dem metallischen Band um ein Stahlflachbandprodukt handelt.

**10.** Verfahren nach einem der Ansprüche 2 bis 9, **dadurch gekennzeichnet, dass** die Überwachung des Leitungssystems (1) auch während eines Stillstandes der Stranggussanlage beziehungsweise des Walzwerkes durchgeführt wird.

**11.** Vorrichtung zur Durchführung des Verfahren nach einem der Ansprüche 1 bis 11, umfassend

• ein Leitungssystem (1) mit zumindest einer Leitung (2), in der ein flüssiges Medium (3), führbar ist,
• zumindest jeweils eine Einrichtung (8,9) zur Ermittlung von

o aktuellem Druck des flüssigen Mediums (3) in der zumindest einen Leitung (2) und
o aktuellem Fluss des flüssigen Mediums in der zumindest einen Leitung (2),

als Parameter,
• eine mit den Einrichtungen (8,9) gekoppelte Recheneinheit (5) zur
Berechnung

o eines theoretischen Flusses des flüssigen Mediums (3) in der zumindest einen Leitung (2) aus den Parametern unter Berücksichtigung einer in der Recheneinheit (5) hinterlegten Flussfunktion, welche einen physikalischen Zusammenhang zwischen dem theoretischen Fluss des flüssigen Mediums (3) und dem aktuellen Druck des flüssigen Mediums (3) beschreibt und
o eines Intervalls für einen Verstopfungsgrad, welcher sich aus dem Quotienten zwischen dem aktuellen und dem theoretischen Fluss ergibt unter Anwendung stochastischer Methoden, innerhalb dessen der Verstopfungsgrad mit einer festzulegenden Wahrscheinlichkeit liegt und

• eine Überwachungseinheit (12) zur Überwachung des Leitungssystems (1) durch Heranziehen der Lage des Intervalls in Bezug auf vorher festgelegte Grenzen für den Verstopfungsgrad als Hinweis für das Vorliegen einer Störung des Leitungssystems (1).

**12.** Vorrichtung nach Anspruch 11, **dadurch gekennzeichnet, dass** sie weiter umfasst:

• ein metallurgisches Aggregat, insbesondere eine Stranggussanlage zur Herstellung eines metallischen Stranges (6) oder ein Walzwerk zur Herstellung eines Metallbandes, ausgestattet mit dem Leitungssystem (1) als Kühlsystem,

• zumindest eine Düse (7), in welche die zumindest eine Leitung (2) des Leitungssystems (1) mündet, mittels der das flüssige Medium (3) auf den metallischen Strang (6) beziehungsweise auf das Metallband aufbringbar ist.

**14.** Vorrichtung nach einem der Ansprüche 12 oder 13, **dadurch gekennzeichnet, dass** sie eine Alarmeinrichtung (13) zur Auslösung eines Alarms als Hinweis für die Störung des Leitungssystems (1) umfasst, welche mit der Recheneinheit (5) gekoppelt ist.

**15.** Computerprogrammprodukt (14) zum Ablauf in der Recheneinheit (5) der Vorrichtung nach einem der Ansprüche 12 bis 14 zur Durchführung des Verfahrens nach einem der Ansprüche 1 bis 11.

**16.** Computerlesbares Speichermedium (15), das das Computerprogrammprodukt (14) nach Anspruch 15 umfasst.

FIG 1

EP 2 905 094 A1

FIG 2

EP 2 905 094 A1

Europäisches
Patentamt

European
Patent Office

Office européen
des brevets

**EUROPÄISCHER RECHERCHENBERICHT**

Nummer der Anmeldung

EP 14 15 4234

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | AT 513 042 B1 (ENGEL AUSTRIA GMBH [AT]) 15. Januar 2014 (2014-01-15) | 1,3-7, 10,11, 14-16 | INV. B22D11/22 B22D46/00 |
| Y | * das ganze Dokument * ----- | 2,8,9,12 | |
| Y | DE 44 17 808 A1 (VOEST ALPINE IND ANLAGEN [AT]) 1. Dezember 1994 (1994-12-01) * Seite 3, Zeilen 43-45 * * Seite 3, Zeilen 47-48 * ----- | 2,8,12 | |
| Y | DE 10 2009 051931 A1 (SMS SIEMAG AG [DE]) 5. Mai 2011 (2011-05-05) * Absätze [0015], [0018], [0024], [0025], [0029], [0034], [0042], [0058]; Abbildungen * ----- | 9 | |
| A | JP H01 149909 A (KAWASAKI STEEL CO) 13. Juni 1989 (1989-06-13) * Zusammenfassung * ----- | 1-12 | |

RECHERCHIERTE SACHGEBIETE (IPC)

B27B
F27B
B22D
B21B

Der vorliegende Recherchenbericht wurde für alle Patentansprüche erstellt

| Recherchenort | Abschlußdatum der Recherche | Prüfer |
|---|---|---|
| Den Haag | 21. August 2014 | Hodiamont, Susanna |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
    ........................................................
& : Mitglied der gleichen Patentfamilie, übereinstimmendes
    Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**     EP 14 15 4234

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

21-08-2014

| Im Recherchenbericht angeführtes Patentdokument | Datum der Veröffentlichung | Mitglied(er) der Patentfamilie | Datum der Veröffentlichung |
|---|---|---|---|
| AT 513042 B1 | 15-01-2014 | AT 513042 A4<br>CN 103878964 A<br>DE 102013016773 A1<br>US 2014175692 A1 | 15-01-2014<br>25-06-2014<br>26-06-2014<br>26-06-2014 |
| DE 4417808 A1 | 01-12-1994 | AT 408197 B<br>DE 4417808 A1 | 25-09-2001<br>01-12-1994 |
| DE 102009051931 A1 | 05-05-2011 | KEINE | |
| JP H01149909 A | 13-06-1989 | KEINE | |

EPO FORM P0461

Für nähere Einzelheiten zu diesem Anhang : siehe Amtsblatt des Europäischen Patentamts, Nr.12/82